# EUROPEAN PATENT SPECIFICATION

(11) **EP 0 513 866 B1**
(45) Date of publication and mention of the grant of the patent: **23.08.1995**
(21) Application number: 92113270.0
(22) Date of filing: 23.10.1987
(51) Int. Cl.: G01C 9/06, G01C 9/10, H01H 36/00, H01H 35/02

(54) **Magnetic tilt sensor wherein the magnetic sensing element is displaceable**
Magnetischer Neigungssensor, bei dem das magnetische Fühlerelement verschiebbar ist
Capteur d'inclinaison magnétique dans lequel l'élément capteur magnétique est déplaçable

(30) Priority: 07.03.1987 JP 51209/87 U; 25.10.1986 JP 164055/86 U; 07.03.1987 JP 32581/87 U; 10.03.1987 JP 33908/87 U
(43) Date of publication of application: 19.11.1992
(62) Divisional of application: 87115618.8
(73) Proprietor: TDK Corporation, Chuo-ku, Tokyo-to 103 (JP)
(72) Inventor: Odagawa, Yoshimoto, Chiba-ken (JP); Yanagisawa, Yasushi, Chiba-ken (JP); Imaizumi, Hiraku, Inba-gun Chiba-ken (JP); Mori, Teruo, Sakura-shi Chiba-ken (JP); Shioura, Takashi, Narita-shi Chiba-ken (JP); Okada, Kazuhiro, Yachiyo-shi Chiba-ken (JP); Yanagisawa, Kiyoshi, Inba-gun Chiba-ken (JP)
(74) Representative: Schwabe - Sandmair - Marx

(56) References cited:
- GB-A- 1 457 891
- GB-A- 2 158 239
- US-A- 3 601 729

## Description

The present invention relates to a tilt sensor comprising a nonmagnetic case having a sealed hollow portion defined by a bottom portion, a side wall and a ceiling portion, a permanent magnet, the surface of said magnet being coated with a magnetic fluid, said permanent magnet being housed in the hollow portion, and a magnetic sensing element, arranged outside the bottom portion of said case, for detecting the magnetic field of said permanent magnet.

Such a tilt sensor is known from GB-A-2 158 239. With this known tilt sensor construction the sealed hollow portion is formed as a spherical chamber which is filled with a ferrofluid. Within which floats a body which comprising a buoyant core carrying a permanent magnet. The magnetic sensing element is comprised of two Hall effect devices which are located in recesses at two opposite ends of the housing. Moreover the housing carries a calibration solenoid.

US-A-3 601 729 discloses a switch assembly for use in an environment requiring automatic switch operation under certain conditions, as when the switch assembly or the body on which the switch is mounted, is tilted or changed in position beyond a predetermined amount. This known assembly includes a housing in which is mounted the switch preferably of the normally open type. A cavity is formed in the housing and has a point adjacent but spaced from the switch contact elements. Actuating means are disposed in the housing cavity and in one modification includes a magnetic member that moves away from the close adjacency to the switch contact elements when the housing is tilted beyond a predetermined amount. Thus, the switch opens until the magnetic member returns to its adjacent position, as when the housing is righted. In another modification a magnetic member is fixed in the housing and magnetic-flux-detecting means are pivotally mounted in the housing and in the cavity. When the housing is tilted, the deflecting means pivots into position between the magnetic member and the switch, thus deflecting the magnetic flux field. The magnetic attraction is removed and the switch opens. When the housing is righted, the magnetic flux is again established to the switch to close the switch contacts.

According to a tilt sensor as is known from European Patent application No. 87 115 618.8-2213, the tilt sensor comprises a nonmagnetic case (1) having a hollow portion defined by a bottom portion (2), a side wall and a ceiling portion, a permanent magnet (3), a surface of which is coated with a magnetic fluid (4), said permanent magnet being housed in the hollow portion, and a magnetic sensing element arranged outside the bottom portion of said case for detecting a magnetism of said permanent magnet.

In case the above described sensor is tilted, the permanent magnet ist moved by its weight to the lowest position along the bottom portion so that the intensity of magnetism around the magnetic sensing element changes.

The main drawback of this tilt sensor is that when the case is tilted and the permanent magnet is moved, the gravity is not the only factor which acts on the magnet. Especially, the magnetic attraction between the magnet und the magnetic sensing elements has a great influence. For this reason a highly precise and reliable detection of whether a tilt of an object is below or exceeds a predetermined angle cannot be guaranted.

The invention as claimed is intended to solve the above problem by a simple constructional embodiment.

It is a main object of the present invention to provide a tilt sensor, wherein a permanent magnet can be adjusted to be reliably moved at a predetermined tilt angle so that a magnetic sensing element can be reliably operated.

In order to achieve this object the present invention is characterized in that
(a) said permanent magnet is housed in the hollow portion to be freely displaceable from the center of said bottom portion in a radial direction;
(b) said bottom portion consists of a first bottom portion comprising a flat surface located at the central position of the hollow portion, and a second bottom portion formed continuous with and around the flat surface to have a predetermined angle with respect to said flat surface; and
(c) said magnetic sensing element is displaceable from the center of the bottom portion in a radial direction.

Further improved embodiments of the construction are disclosed within the subclaims 2 to 4.

The above and other objects, features and advantages of the present invention will be apparent from the following detailed description of an embodiment in conjunction with the accompanying drawings.
- Fig. 1: is a view showing the operation of the present invention;
- Fig. 2: is a view showing a method of adjusting a mounting position of a lead switch according to the present invention;
- Fig. 3 (a): is a plane view showing an arrangement of the embodiment of the present invention;
- Fig. 3 (b): is a sectional view thereof.

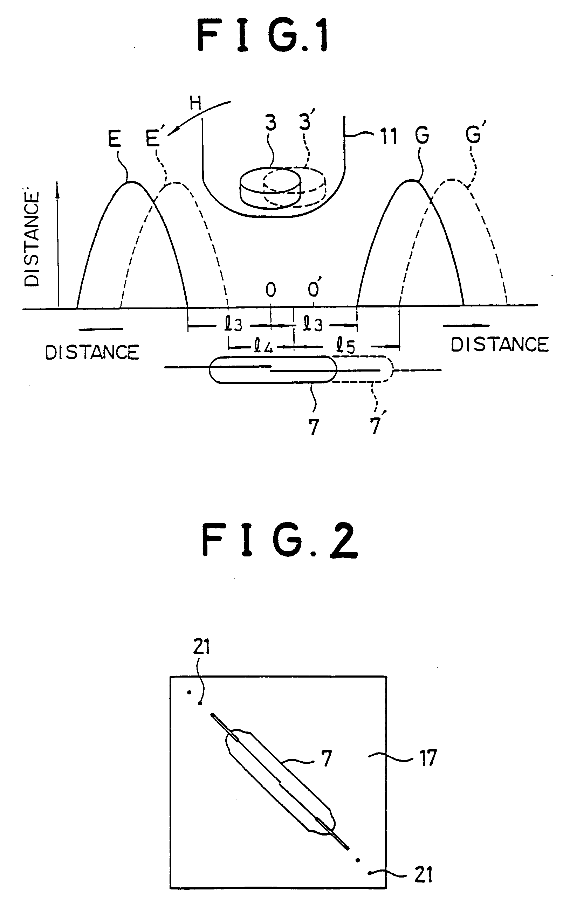

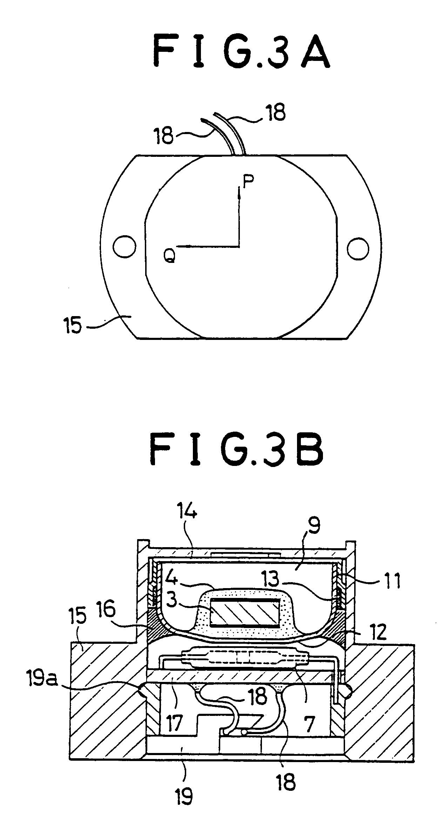

Fig. 3 shows the embodiment of the present invention. Reference numeral 11 denotes a nonmagnetic case which is constituted by a bottom portion 12 consisting of a first bottom surface located at the central portion of the case when the second bottom surface continues with and crossing the first bottom surface at a predetermined angle, side wall 13 continues with the bottom portion 12, and lid 14, and includes a sealed hollow portion 9. The hollow portion 9 contains a substantially disklike permanent magnet 3, a surface of which is coated with a magnetic fluid 4. Reference numeral 15 denotes a sensor mounting base. The case 11 is inserted into an upper portion of the sensor mounting base and fixed by a resin 16. Reference numeral 7 denotes a lead switch serving as a magnetic sensing element disposed displaceable on a printed board 17 (Fig. 2), lead terminals of the lead switch being soldered. Leads 18 extend from the printed board. Reference numeral 19 denotes a lower cover fixed by fitting pawls 19a extending from opposite sides in recesses formed in the mounting base 15.

Fig. 1 is a view for qualitatively explaining an operation of the present invention. The permanent magnet 3 and the lead switch 7 are indicated by solid lines.

Assume that when the permanent magnet 3 is moved left by a distance ℓ₃, the lead switch 7 is operated. Similarly, when the permanent magnet 3 is moved right by the distance ℓ₃, the lead switch 7 is operated. Reference symbols E and G denote curves indicating the operation characteristics (to be referred to as operation curves hereinafter), wherein the abscissa represents a movement distance of the permanent magnet 3 from the center 0 of the lead switch, and the ordinate represents a distance between the permanent magnet and the lead switch. As they move apart from each other in the ordinate direction, magnetic influences acting on the lead switch become small, and hence the movement distance of the permanent magnet in the abscissa direction need be set to be long to operate the lead switch.

When the lead switch is moved to a position 7' indicated by a broken line, the center of the lead switch is moved from the center 0 to a center 0', and the operation curves move to curves E' and G' . Since the magnetic attraction acts between the permanent magnet and the lead switch, the permanent magnet is moved to a position 3' along with movement of the lead switch. However, the permanent magnet is stopped by an arcuated portion of the bottom portion of the case 11, and hence it cannot be further moved toward the center 0' . When the case 11 is tilted in a direction H and the permanent magnet 3' is moved left by a distance ℓ₄, the lead switch is operated.

More specifically, prior to the displacement of the lead switch, the lead switch is operated when the permanent magnet is moved to the distance ℓ₃. For this movement of the permanent magnet, the case need be tilted at e.g. an angle of 15°. After the displacement of the lead switch, the lead switch is operated when the permanent magnet is moved by the distance ℓ₄. In this case, ℓ₃ > ℓ₄, and the case need be tilted at e.g. an angle of 10° to move the permanent magnet by the distance ℓ₄.

Note that if the case is tilted in the opposite direction, the permanent magnet need be moved by a distance ℓ₅ (>ℓ₃). For this purpose, the case must be tilted at an angle of more than 15°.

Thus, a tilt angle of the case i.e. a response angle can be adjusted by displacing the lead switch to be substantially parallel to the bottom surface of the case at an appropriate position.

Fig. 2 shows a method of adjusting a position of the lead switch in detail. A plurality of lead switch mounting holes 21 are formed in a printed board 17. A position of the lead switch with respect to the bottom portion of the case is changed by selectively mounting the lead switch 7 in the mounting holes 21, thereby adjusting a response angle. When fine adjustment is required, a length of each of the leads i.e. from an end portion of the lead switch to the mounting hole can be appropriately adjusted during soldering. The lead switch 7 is mounted along a diagonal line of the printed board 17 so that the tilts in the directions P and Q shown in Fig. 3 (a) can be detected by a single lead switch.

Since a response angle can be arbitrarily set by changing a mounting position of the lead switch, even if variations in e.g. mounting positions of the components of the sensor are present, the lead switch can be reliably operated at a predetermined tilt angle.

Although the lead switch is mounted by selecting the mounting holes formed in the printed board so as to change the position of the lead switch in the above embodiment, a mechanism for externally moving the printed board on which the lead switch is mounted beforehand may be arranged. In addition, although the lead switch is displaced from the center of the case in the radial direction thereof in the embodiment, the displacement in a vertical direction may be combined with the above displacement.

## Claims

1. A tilt sensor comprising a nonmagnetic case (11) having a sealed hollow portion (9) defined by a bottom portion (12), a side wall (13) and a ceiling portion (14), a permanent magnet (3), the surface of said magnet being coated with a magnetic fluid (4), said permanent magnet being housed in the hollow portion (9), and a magnetic sensing element (7), arranged outside the bottom portion (12) of said case (11), for detecting the magnetic field of said permanent magnet (3),
**characterized** in that
(a) said permanent magnet is housed in the hollow portion (9) to be freely displaceable from the center of said bottom portion in a radial direction;
(b) said bottom portion (12) consists of a first bottom portion comprising a flat surface located at the central position of the hollow portion, and a second bottom portion formed continuous with and around the flat surface to have a predetermined angle with respect to said flat surface; and
(c) said magnetic sensing element (7) is displaceable from the center of the bottom portion in a radial direction.

2. A sensor according to claim 1, wherein said magnetic sensing element comprises a lead switch (7) arranged to be substantially parallel to the bottom portion.

3. A tilt sensor according to claim 2, wherein said magnetic sensing element is mounted on a printed board (17), and moved together with the printed board.

4. A tilt sensor according to claim 1 or 2, wherein said magnetic sensing element is mounted on a printed board (17) having a plurality of mounting holes (21), and a position of said magnetic sensing element relative to the bottom portion can be changed by appropriately selecting the mounting holes.

## Patentansprüche

1. Neigungssensor mit einem nichtmagnetischen Gehäuse (11), welches einen abgedichteten hohlen Abschnitt (9) aufweist, der durch einen Bodenabschnitt (12), eine Seitenwand (13) und einen Deckenabschnitt (14) definiert ist, mit einem Permanentmagneten (3), dessen Oberfläche mit einem magnetischen Fluid (4) bedeckt ist, wobei der Permanentmagnet in dem hohlen Abschnitt (9) aufgenommen ist, und mit einem mag netischen Fühlelement (7), welches außerhalb dem Bodenabschnitt (12) des Gehäuses (11) angeordnet ist, um das Magnetfeld des Permanentmagneten (3) zu detektieren, dadurch **gekennzeichnet**, daß
(a) der Permanentmagnet in dem hohlen Abschnitt (9) so auf genommen ist, daß er frei vom Zentrum des Bodenabschnitts in einer radialen Richtung verschiebbar ist,
(b) der Bodenabschnitt (12) aus einem ersten Bodenabschnitt besteht, der eine ebene Fläche besitzt, die an der zentralen Position des hohlen Abschnitts gelegen ist, und einen zweiten Bodenabschnitt besitzt, der um die ebene Fläche herum und fluchtend bzw. durchgehend mit dieser ausgebildet ist, so daß dieser einen vorbestimm ten Winkel hinsichtlich der ebenen Fläche bildet, und
(c) das magnetische Fühlelement (7) vom Zentrum des Bodenabschnitts in einer radialen Richtung verschiebbar ist.

2. Neigungssensor nach Anspruch 1, bei welchem das magnetische Fühlelement einen Zungenschalter bzw. Reed-Schalter (7) aufweist, der so angeordnet ist, daß er im wesentlichen parallel zum Bodenabschnitt ist.

3. Neigungssensor nach Anspruch 2, bei dem das magnetische Fühlelement auf einer gedruckten Leiterplatte (17) montiert ist und zusammen mit der gedruckten Leiterplatte bewegt wird.

4. Neigungssensor nach Anspruch 1 oder 2, bei dem das magnetische Fühlelement auf einer gedruckten Leiterplatte (17) montiert ist, die eine Vielzahl von Befestigungsöffnungen (21) besitzt, wobei eine Position des magnetischen Fühlelements relativ zu dem Bodenabschnitt durch geeignete Auswahl der Befestigungsöffnungen geändert werden kann.

## Revendications

1. Capteur d'inclinaison comprenant un boîtier non magnétique (11) ayant une partie creuse fermée hermétiquement (9) définie par une partie de base (12), une paroi latérale (13) et une partie de plafond (14), un aimant permanent (3), la surface dudit aimant étant recouverte d'un fluide magnétique (4), ledit aimant permanent étant logé dans la partie creuse (9), et un élément de détection magnétique (7), disposé à l'extérieur de la partie de base (12) dudit boîtier (11), pour détecter le champ magnétique dudit aimant permanent (3),
**caractérisé** en ce que
(a) ledit aimant permanent est logé dans la partie creuse (9) pour pouvoir être déplacé librement dans une direction radiale à partir du centre de ladite partie de base;
(b) ladite partie de base (12) est constituée d'une première partie de base comprenant une surface plane située en position centrale de la partie creuse, et d'une seconde partie de base formée de façon continue avec la surface plane et autour de celle-ci pour avoir un angle prédéterminé par rapport à ladite surface plane; et
(c) ledit élément de détection magnétique (7) peut se déplacer dans une direction radiale depuis le centre de la partie de base.

2. Capteur d'inclinaison selon la revendication 1, dans lequel ledit élément de détection magnétique comporte un commutateur (7) à conducteurs disposé de façon à être sensiblement parallèle à la partie de base.

3. Capteur d'inclinaison selon la revendication 2, dans lequel ledit élément de détection magnétique est monté sur une carte imprimée (17) et est déplacé conjointement avec la carte imprimée.

4. Capteur d'inclinaison selon la revendication 1 ou 2, dans lequel ledit élément de détection magnétique est monté sur une carte imprimée (17) ayant une pluralité de trous de montage (21), et une position dudit élément de détection magnétique par rapport à la partie de base peut être modifiée en choisissant de manière appropriée les trous de montage.
